# EUROPÄISCHE PATENTSCHRIFT

(11) **EP 3 028 385 B1**
(45) Veröffentlichungstag und Bekanntmachung des Hinweises auf die Patenterteilung: **07.12.2016**
(21) Anmeldenummer: 14734790.0
(22) Anmeldetag: 27.06.2014
(51) Int. Cl.: H03K 17/689, H04L 25/02

(54) **ANORDNUNG ZUM ANSCHLUSS EINER KOMPONENTE AN EIN MASTER- STEUERGERÄT EINES KRAFTFAHRZEUGS**
ARRANGEMENT FOR CONNECTING A COMPONENT TO A MASTER CONTROLLER IN A MOTOR VEHICLE
AGENCEMENT POUR RACCORDER UN COMPOSANT À UN MODULE DE COMMANDE MAÎTRE D'UN VÉHICULE

(30) Priorität: 31.07.2013 DE 102013214953
(43) Veröffentlichungstag der Anmeldung: 08.06.2016
(73) Patentinhaber: Robert Bosch GmbH, 70442 Stuttgart (DE)
(72) Erfinder: PAULI, Stephan, 77855 Achern (DE)
(86) Internationale Anmeldenummer: PCT/EP2014/063661
(87) Internationale Veröffentlichungsnummer: WO 2015/014552

(56) Entgegenhaltungen:
- EP-A2- 1 291 998
- DE-A1- 19 755 050
- DE-A1-102011 053 904
- FR-A1- 2 850 071

## Beschreibung

### Stand der Technik

Die vorliegende Erfindung betrifft eine Anordnung mit einem Master-Steuergerät und einem Slave- Steuergerät, die für einen Datenaustausch miteinander über eine Kommunikationsleitung miteinander verbunden sind. Die vorliegende Erfindung betrifft weiterhin das Master- Steuergerät sowie das Slave- Steuergerät.

Komponenten im Kraftfahrzeug, die über ein zentrales Steuergerät, im Folgenden Master- Steuergerät, steuerbar sind, und die mit einer von der Bezugsspannung des Master- Steuergerätes abweichenden Bezugsspannung arbeiten, benötigen jeweils eigene Versorgungsleitungen und Masseanschlüsse, um sicher zu stellen, dass Fehlströme in das Master- Steuergerät bei einem Masseverlust, bei Kurzschlüssen oder durch Verpolen vermieden werden.

Für die Kommunikation mit dem Master- Steuergerät weisen solche Komponenten jeweils eine Sende- und Empfangseinheit auf, wobei die Sende- und Empfangseinheit mit einer Sende- und Empfangseinheit des Master-Steuergerätes kommuniziert. Zudem weisen solche Komponenten einen Verbraucher auf, beispielsweise einen Verstellantrieb für einen Sitz, einen Scheibenwischer, eine Heckklappe oder ein Fenster. Weiterhin weisen solche Komponenten eine Gerätesteuerung auf, die für die Steuerung des Verbrauchers in Abhängigkeit von den vom Master- Steuergerät übermittelten Daten vorgesehen.

An das Master- Steuergerät sind zumeist mehrere solche Komponenten anschließbar. Dabei ist die Kommunikation zwischen den Komponenten und dem Master- Steuergerät, d. h. welcher Teilnehmer wann auf die Kommunikationsleitung zugreift, über ein Protokoll geregelt, bei dem das Master- Steuergerät zumeist als Master und die Komponenten zumeist als Slave agieren. Daher wird ein elektrischer Teil jeder der Komponenten, der ihre Sende- und Empfangseinheit sowie ihre Gerätesteuerung umfasst, im Folgenden als Slave- Steuergerät bezeichnet.

Ein Master- Steuergerät arbeitet herkömmlich mit einer 12V Bordnetzspannung als Bezugsspannung. Es stellt den Slave- Steuergeräten, die häufig mit einer Bezugsspannung von 12V, 24V oder 48V arbeiten, ein pulsweitenmoduliertes Kommunikationssignal (PWM) für die Kommunikation über die Kommunikationsleitung zur Verfügung, das Steuerbefehle für die Steuerung der Verbraucher beinhaltet.

Um Fehlströme zu vermeiden, die das Master- Steuergerät beschädigen können, ist der Anschluss von Slave- Steuergeräten, die eine andere Bezugspannung als die des Master- Steuergerätes nutzen, bisher nur mit einer galvanischen Trennung zulässig.

Das Dokument DE19755050 beschreibt eine Anordnung aus einem Master-Steuergerät und einem Slave-Steurgerät für ein Kraftfahrzeug, wobei das Master-Steuergerät mit einer ersten Bezugsspannung und das Slave-Steuergerät mit einer zweiten Bezugsspannung arbeitet.

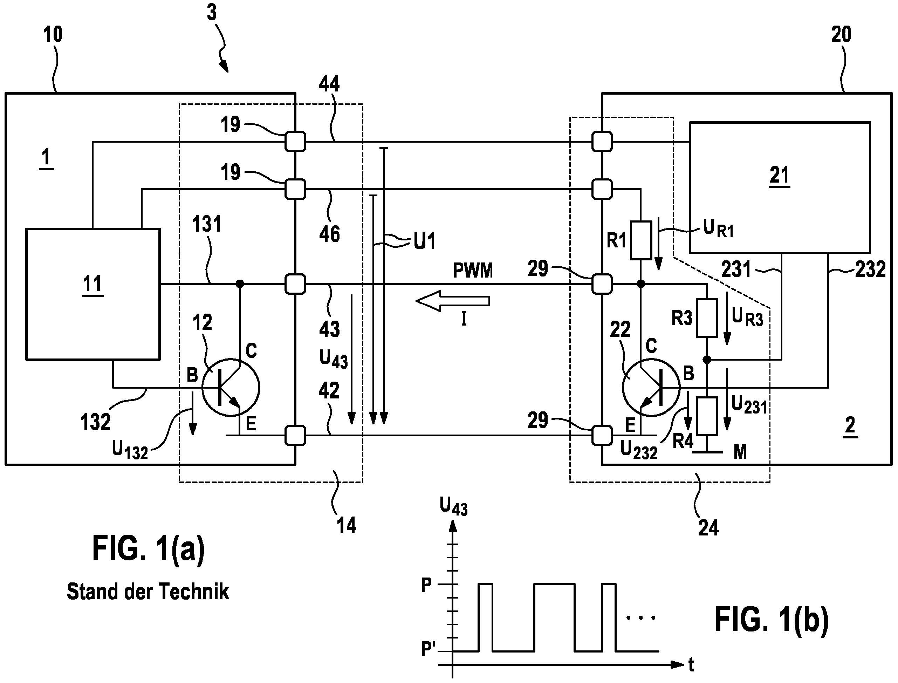

Die **Fig. 1** zeigt eine Anordnung mit einer ersten Ausführungsform eines Slave- Steuergerätes und einem Master- Steuergerät, bei dem sowohl das Master- Steuergerät als auch das Slave- Steuergerät eine 12V- Bordnetzspannung als Bezugsspannung nutzen. Daher ist bei diesem Ausführungsbeispiel nach dem Stand der Technik keine galvanische Trennung erforderlich.

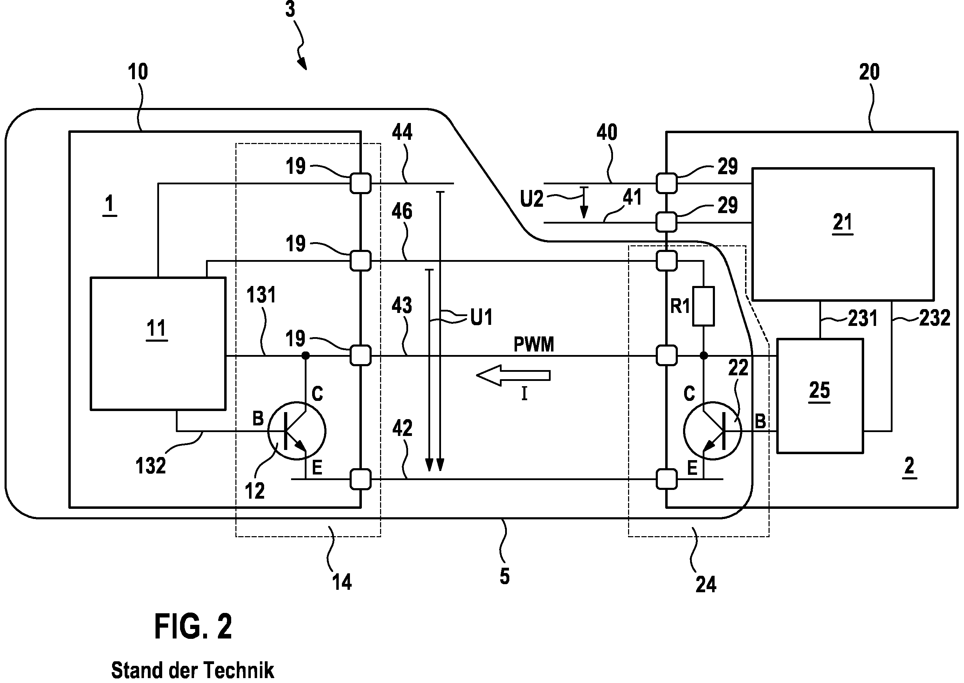

Die **Fig. 2** zeigt eine Anordnung nach dem Stand der Technik mit einer zweiten Ausführungsform eines Slave- Steuergerätes, das eine andere Bezugsspannung als die des Master- Steuergerätes nutzt, beispielsweise anstelle der 12V eine 24V oder eine 48V Bezugsspannung. Damit bei einem Masseverlust, durch Kurzschlüsse oder durch Verpolen keine Fehlströme vom Slave- Steuergerät zum Master- Steuergerät fließen können, ist die Sende- und Empfangseinheit des Slave- Steuergerätes von ihrer mit der anderen Bezugsspannung arbeitenden Gerätesteuerung galvanisch, beispielsweise über Optokoppler (nicht gezeigt), getrennt.

Die Nutzung einer galvanischen Trennung ist aber teuer und erfordert erheblichen Bauraum.

### Offenbarung der Erfindung

Aufgabe der vorliegenden Erfindung ist es daher, eine Anordnung zum Anschluss eines eine erste Bezugsspannung nutzenden Master- Steuergerätes an ein eine zweite Bezugsspannung nutzendes Slave- Steuergerät eines Kraftfahrzeugs zu schaffen, die keine galvanische Trennung erfordert und daher kostengünstiger und kompakter herstellbar ist.

Die Aufgabe wird gelöst mit einer Anordnung aus einem Master- Steuergerät und einem Slave- Steuergerät für ein Kraftfahrzeug, wobei das Master- Steuergerät eine erste Sende- und Empfangseinheit und das Slave-Steuergerät eine zweite Sende- und Empfangseinheit umfassen, sowie eine die Sende- und Empfangseinheiten verbindende Kommunikationsleitung, wobei das Master- Steuergerät mit einer ersten Bezugsspannung und das Slave- Steuergerät mit einer zweiten Bezugsspannung arbeiten, die verschieden sind, und wobei in der Kommunikationsleitung eine Diode vorgesehen ist, die einen Stromfluss von der zweiten Sende- und Empfangseinheit in Richtung zur ersten Sende- und Empfangseinheit verhindert. Ein bei einem Masseverlust, bei einem Kurzschluss oder durch Verpolen fließender Fehlstrom vom Slave- Steuergerät über die Kommunikationsleitung in das Master- Steuergerät kann daher nicht fließen.

Es ist bevorzugt, dass die Bezugsspannungen Gleichspannungen sind.

Besonders bevorzugt ist die erste Bezugsspannung kleiner als die zweite Bezugsspannung, um den Stromfluss bei der Kommunikation vom Slave-Steuergerät zum Master- Steuergerät zu gewährleisten. Dabei fallen die erste Bezugsspannung und die zweite Bezugsspannung jeweils zwischen einem ersten Bezugspotential und einem zweiten Bezugspotential ab.

Zudem ist es bevorzugt, dass die erste und zweite Bezugsspannung jeweils mit einem zentralen Massepunkt, insbesondere des Kraftfahrzeugs, verbunden sind. Sie weisen daher ein gemeinsames, an dem zentralen Massepunkt miteinander verbundenes zweites Bezugspotential auf, nämlich Masse. In dieser Ausführungsform ist das erste Bezugspotential der ersten Bezugsspannung daher kleiner als das erste Bezugspotential der zweiten Bezugsspannung.

In einer bevorzugten Ausführungsform, die die Aufgabe ebenfalls löst, ist die Kommunikationsleitung über einen Pull up- Widerstand mit einer ersten Versorgungsleitung des Master- Steuergerätes verbindbar. Es ist bevorzugt, dass an der ersten Versorgungsleitung das erste Bezugspotential der ersten Bezugsspannung anliegt. Durch Verbinden der Kommunikationsleitung mit der Versorgungsleitung liegt daher an der Kommunikationsleitung etwa das um den Spannungsabfall am Pull up- Widerstand verminderte erste Bezugspotential als erstes Spannungspotential an.

Die Anordnung dieser Ausführungsform zeichnet sich dadurch aus, dass der Pull up- Widerstand im Master- Steuergerät angeordnet ist. Dadurch benötigt das Slave- Steuergerät die erste Bezugsspannung gar nicht, und es sind auch keine Verbindungsmittel zum Anschluss einer ersten Versorgungsleitung und/oder einer ersten Masseleitung für die erste Bezugsspannung am Slave- Steuergerät erforderlich. Da die erste Bezugsspannung gar nicht am Slave- Steuergerät vorgesehen ist, ist auch keine galvanische Trennung erforderlich.

Zum Verbinden der Kommunikationsleitung mit der ersten Versorgungsleitung ist es bevorzugt, dass die Sende- und Empfangseinheit des Master-Steuergerätes einen ersten elektrischen Schalter umfasst. Dabei ist es bevorzugt, dass die Kommunikationsleitung bei geschlossenem erstem elektrischem Schalter mit der ersten Versorgungsleitung verbunden ist. Vorzugsweise ist ein pulsierendes Sendesignal auf der Kommunikationsleitung durch abwechselndes Öffnen und Schließen des ersten elektrischen Schalters erzeugbar. Dabei wird das bei geschlossenem erstem elektrischem Schalter an der Kommunikationsleitung anliegende erste Spannungspotential in ein zweites an der Kommunikationsleitung anliegendes Spannungspotential verändert. Das zweite Spannungspotential beträgt bevorzugt etwa Masse. Durch Veränderung der Zeit, in der der erste elektrische Schalter geschlossen oder geöffnet ist, ist bevorzugt ein pulsweitenmoduliertes Sendesignal auf der Kommunikationsleitung erzeugbar. Vorzugsweise weist das Master- Steuergerät eine Gerätesteuerung auf, mit der das Öffnen und Schließen des ersten elektrischen Schalters, insbesondere die Dauer, in der dieser geöffnet oder geschlossen ist, steuerbar ist. In dieser Ausführungsform ist ein Senden vom Master- Steuergerät zum Slave- Steuergerät daher durch Öffnen und Schließen des ersten elektrischen Schalters möglich.

Zudem ist es bevorzugt, dass die Sende- und Empfangseinheit des Slave-Steuergerätes einen zweiten elektrischen Schalter umfasst. Der zweite elektrische Schalter ist zum Senden eines Kommunikationssignals vom Slave- Steuergerät zum Master- Steuergerät vorgesehen. Vorzugsweise ist ein pulsierendes Sendesignal auf der Kommunikationsleitung auch durch abwechselndes Öffnen und Schließen des zweiten elektrischen Schalters erzeugbar. Es ist bevorzugt, dass auch beim Senden vom Slave- Steuergerät zum Master- Steuergerät die an der Kommunikationsleitung anliegende Spannung über die Versorgungsleitung des Master-Steuergerätes bereitgestellt wird. Dafür ist es bevorzugt, dass der erste elektrische Schalter der ersten Sende- und Empfangseinheit des Master-Steuergerätes in einem Empfangsmodus, insbesondere beim Senden des Sendesignals vom Slave- Steuergerät zum Master- Steuergerät, geschlossen ist. Beim Senden vom Salve- Steuergerät zum Master- Steuergerät liegt dann bei geöffnetem zweitem Schalter an der Kommunikationsleitung etwa das um den Spannungsabfall am Pull up- Widerstand verminderte erste Bezugspotential der ersten Bezugsspannung an. Auch dabei ist es bevorzugt, dass das bei geöffnetem zweitem elektrischem Schalter an der Kommunikationsleitung anliegende erste Spannungspotential durch Schließen des zweiten elektrischen Schalters in ein zweites an der Kommunikationsleitung anliegendes Spannungspotential, und zwar ebenfalls etwa in Masse, veränderbar ist. Weiterhin ist auch hier bevorzugt, dass durch eine Veränderung der Zeit, in der der zweite elektrische Schalter geschlossen oder geöffnet ist, ein pulsweitenmoduliertes Sendesignal auf der Kommunikationsleitung erzeugbar ist. Vorzugsweise weist das Slave- Steuergerät dafür ebenfalls eine Gerätesteuerung auf, mit der das Öffnen und Schließen des zweiten elektrischen Schalters, insbesondere die Dauer, in der dieser geöffnet oder geschlossen ist, steuerbar ist. In dieser Ausführungsform ist ein Senden vom Slave- Steuergerät zum Master- Steuergerät daher durch Öffnen und Schließen des zweiten elektrischen Schalters möglich.

Da sowohl das beim Senden vom Slave- Steuergerät zum Master- Steuergerät als auch beim Senden vom Master- Steuergerät zum Slave- Steuergerät auf der Kommunikationsleitung erforderliche erste Spannungspotential mit Hilfe des an der ersten Versorgungsleitung anliegenden ersten Bezugspotentials der ersten Bezugsspannung, mit der das Master- Steuergerät arbeitet, bereitgestellt wird, sind am Slave- Steuergerät nur die für die zweite Bezugsspannung, mit der dieses arbeitet, erforderlichen Versorgungsleitungen vorgesehen. Das Master- Steuergerät ist daher nur noch über die Kommunikationsleitung mit dem Slave- Steuergerät unmittelbar verbunden.

Der erste elektrische Schalter und/oder der zweite elektrische Schalter sind bevorzugt als Transistoren, insbesondere als Bipolartransistoren, ausgebildet. Es sind aber auch andere elektrische Schalter wie beispielsweise Feldeffekttransistoren, IGBT's (Insulated Gate Bipolar Transistor) oder Relais als erster oder zweiter elektrischer Schalter nutzbar.

Die Diode ist bevorzugt in der Sende- und Empfangseinheit des Slave-Steuergerätes angeordnet. Prinzipiell ist sie auch in der Kommunikationsleitung oder im Master- Steuergerät anordbar. Die Anordnung im Slave-Steuergerät hat aber den Vorteil, dass das Anschließen mehrerer Slave-Steuergeräte an die Kommunikationsleitung durch einfaches paralleles Anordnen der Slave- Steuergeräte möglich ist. Die Kathode der Diode weist bevorzugt in Richtung des Slave- Steuergerätes, so dass ein Stromfluss nur vom Master- Steuergerät zum Slave- Steuergerät möglich ist, beziehungsweise so dass der Stromfluss vom Slave- Steuergerät zum Master- Steuergerät verhindert wird.

Die Aufgabe wird ebenfalls gelöst mit einem Master- Steuergerät für eine solche Anordnung. Es ist bevorzugt, dass das Master- Steuergerät den Pull up- Widerstand umfasst. Das erste Spannungspotential auf der Kommunikationsleitung wird daher über die erste Bezugsspannung bereitgestellt, die an der ersten Versorgungsleitung des Master- Steuergerätes anliegt. Das Slave- Steuergerät benötigt die erste Bezugsspannung daher gar nicht. Daher ist auch keine galvanische Trennung erforderlich.

Es ist bevorzugt, dass das Master- Steuergerät eine Sende- und Empfangseinheit mit einem ersten elektrischen Schalter umfasst, der zum Verbinden der Kommunikationsleitung mit der ersten Versorgungsleitung vorgesehen ist. Die Anordnung aus dem an der ersten Versorgungsleitung angeschlossenen Pull up Widerstand und dem ersten elektrischen Schalter wirkt dabei wie eine Stromquelle, die das auf der Versorgungsleitung zur Verfügung gestellte Signal bereitstellt. Prinzipiell ist diese Anordnung daher auch durch eine Stromquelle ersetzbar.

Das auf der Kommunikationsleitung zur Verfügung stehende Spannungspotential ist bevorzugt über einen Spannungsteiler bestimmt, der den Pull up Widerstand und einen zweiten Widerstand umfasst.

Weiterhin wird die Aufgabe mit einem Slave- Steuergerät für eine solche Anordnung gelöst. Es ist bevorzugt, dass das Slave- Steuergerät die Diode umfasst, um die Fehlströme vom Slave- Steuergerät zum Master-Steuergerät zu verhindern.

Das Master- Steuergerät und das Slave- Steuergerät sind für das Senden und Empfangen in beide Richtungen nur über eine einzige Kommunikationsleitung miteinander verbunden. Zudem ist keine galvanische Trennung zwischen der Gerätesteuerung und der Sende- und Empfangseinheit des Slave- Steuergerätes erforderlich.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt in **(a)** eine Anordnung zum Anschluss eines Slave-Steuergerätes an ein Master- Steuergerät nach dem Stand der Technik, wobei sowohl das erste Slave- Steuergerät als auch das Master- Steuergerät dieselbe Bezugsspannung nutzen, und in **(b)** beispielhaft ein auf einer Kommunikationsleitung anliegendes pulsweitenmoduliertes Sendesignal,
- **Fig. 2**: zeigt eine weitere Anordnung zum Anschluss eines Slave-Steuergerätes an das Master- Steuergerät der **Fig. 1** nach dem Stand der Technik, wobei das Slave- Steuergerät eine andere Bezugsspannung als das Master- Steuergerät nutzt,
- **Fig. 3**: zeigt eine erfindungsgemäße Anordnung zum Anschluss eines Slave- Steuergerätes an ein Master- Steuergerät, wobei das Slave- Steuergerät eine andere Bezugsspannung als das Master- Steuergerät nutzt, und
- **Fig. 4**: zeigt in **(a)** schematisch einen Masseverlust auf Seiten des Slave- Steuergerätes, und in **(b)** schematisch ein Verpolen einer zweiten Bezugsspannung des Slave- Steuergerätes.

Die **Fig. 1** zeigt eine Anordnung 3 für den Anschluss eines Slave- Steuergeräts 2 an ein Master- Steuergerät 1. Sowohl das Master- Steuergerät 1 als auch das Slave- Steuergerät 2, die im Folgenden auch als Komponenten der Anordnung 3 bezeichnet werden, nutzen eine 12V- Bordnetzspannung als erste Bezugsspannung. Daher ist bei diesem Ausführungsbeispiel nach dem Stand der Technik keine galvanische Trennung erforderlich. Da das Slave- Steuergerät 2 mit derselben Bezugsspannung wie das Master- Steuergerät arbeitet, ist eine gemeinsame Masseleitung 42 vom Slave- Steuergerät 2 zum Master- Steuergerät 1 vorgesehen und zulässig. Das Master- Steuergerät 1 ist in einem Steuergerätegehäuse 10 angeordnet. Es umfasst eine Gerätesteuerung 11 und eine Sende- und Empfangseinheit 14. Die Gerätesteuerung weist eine Sendeleitung 132 zum Senden eines Sendesignals PWM vom Master- Steuergerät 1 zum Slave-Steuergerät 2 und eine Empfangsleitung 131 zum Empfangen eines Sendesignals PWM vom Slave- Steuergerät 2 zum Master- Steuergerät 1 auf.

Die Gerätesteuerung 11 ist über eine erste Versorgungsleitung 44 und eine Masseleitung 42 an eine Gleichspannungsquelle (nicht gezeigt) angeschlossen, die eine erste Bezugsspannung U1 bereitstellt. Dabei liegt an der ersten Versorgungsleitung 44 ein erstes Bezugspotential der ersten Bezugsspannung U1, nämlich hier eine 12V Bordnetzspannung eines Kraftfahrzeugs, an. An der Masseleitung 42 liegt ein zweites Bezugspotential der ersten Bezugsspannung U1, nämlich Masse, an.

Zudem ist die Gerätesteuerung 11 an eine Zündschaltleitung 46 angeschlossen, die mit einem Zündschlüssel (nicht gezeigt) des Kraftfahrzeugs verbunden ist, so dass das Master- Steuergerät 1 nur bei eingeschalteter Zündung aktiv ist. Dadurch ist sicher gestellt, dass das Master- Steuergerät 1 und/oder das an das Master- Steuergerät 1 angeschlossene Slave-Steuergerät 2 nicht ungewollt aktiv sind. Die Zündschaltleitung 46 liegt ebenfalls am ersten Bezugspotential der ersten Bezugsspannung U1 an, nämlich an den 12V.

Zum Senden umfasst die Sende- und Empfangseinheit 14 einen ersten Schalter 12, der hier als Bipolar- Transistor ausgebildet ist. Der BipolarTransistor ist in Emitterschaltung angeordnet. Im Folgenden werden die Begriffe erster Schalter 12 und erster Transistor synonym verwendet. Dafür sind der Emitter E des ersten Transistors 12 an die Masseleitung 42, die Basis B des ersten Transistors 12 an die Sendeleitung 132 der Gerätesteuerung 11 und der Kollektor C an eine Kommunikationsleitung 43 zwischen dem Master- Steuergerät 1 und dem Slave- Steuergerät 2 angeschlossen. Die Kommunikationsleitung 43 ist ebenfalls an die Empfangsleitung 131 der Gerätesteuerung 11 angeschlossen und hochohmig ausgebildet.

Auch das Slave- Steuergerät 2 ist in einem Slave- Steuergerätegehäuse 20 angeordnet. Um das Slave- Steuergerät 2 an das Master- Steuergerät 1 anschließen zu können, sind in den Gehäusen 10, 20 der Komponenten 1, 2 jeweils Anschlussstecker 19, 29 vorgesehen, die im aneinander angeschlossenen Zustand über Anschlussleitungen 42 - 44, 46 miteinander verbunden sind.

Das Slave- Steuergerät 2 umfasst ebenfalls eine Gerätesteuerung 21, die eine Sendeleitung 232 und eine Empfangsleitung 231 aufweist. Auch hier ist eine Sende- und Empfangseinheit 24 mit einem zweiten Schalter 22 vorgesehen, der als Bipolar- Transistor ausgebildet ist. Auch dieser zweite Transistor 22 ist in Emitterschaltung geschaltet. Im Folgenden werden die Begriffe zweiter Schalter 22 und zweiter Transistor synonym verwendet.

Dabei ist die Sendeleitung 232 des Slave- Steuergeräts 2 mit der Basis B des zweiten Transistors 22 verbunden. Der Emitter des zweiten Transistors 22 ist an die Masseleitung 42 angeschlossen. Der Kollektor C des zweiten Transistors 22 ist an die Kommunikationsleitung 43 angeschlossen. Zudem ist er über einen Pull- Up- Widerstand R1 an eine definierte Spannung angeschlossen, und zwar hier über die Zündschaltleitung 46 an die erste Bezugsspannung U1. Prinzipiell ist auch ein Anschluss des Pull- Up- Widerstandes R1 an die erste Bezugsspannung U1 über die erste Versorgungsleitung 44 möglich. Der Anschluss über die Zündschaltleitung 46 hat gegenüber dem über die erste Versorgungsleitung 44 aber den oben bereits genannten Vorteil, dass eine Kommunikation dann nur bei eingeschalteter Zündung möglich ist.

Die Empfangsleitung 231 des Slave- Steuergeräts 2 ist an einen Spannungsteiler R3R4, der einen dritten Widerstand R3 und einen vierten Widerstand R4 umfasst, angeschlossen. Der dritte Widerstand R3 verbindet die Kommunikationsleitung 43 mit der Empfangsleitung 231. Der vierte Widerstand R4 verbindet die Empfangsleitung 231 mit Masse M. Dadurch wird ein auf der Empfangsleitung 231 beziehungsweise an der Gerätesteuerung 21 anliegende Spannungspotential U₂₃₁ beim Empfangen des Sendesignals PWM vom Master- Steuergerät 1 zum Slave- Steuergerät 2 so angepasst, dass es von der Gerätesteuerung 21 des Slave- Steuergerätes 2 verarbeitbar ist.

Zum Senden des Sendesignals PWM vom Master- Steuergerät 1 zum Slave- Steuergerät 2 wird der erste elektrische Schalter 12 abwechselnd geöffnet und geschlossen. Zum Schließen wird dafür von der Gerätesteuerung 11 des Master- Steuergerätes 1 an der Basis B des ersten Transistors 12 eine Spannung (nicht gezeigt) bereitgestellt, die einen Stromfluss I vom Kollektor C zum Emitter E ermöglicht. Der erste elektrische Schalter 12 wird wieder geöffnet, indem diese Spannung nicht zur Verfügung gestellt wird, und daher kein Stromfluss I vom Kollektor C zum Emitter E möglich ist. Dabei ist der zweite elektrische Schalter 22 der Sende- und Empfangseinheit 24 des Slave- Steuergerätes 2 geöffnet.

Ist der erste elektrische Schalter 12 geöffnet, fällt die erste Bezugsspannung U1 über den Pull up- Widerstand R1 und den Spannungsteiler R3R4 im Slave- Steuergerät 2 zur Masse ab. Die Kommunikationsleitung 43 liegt dann an einem ersten Spannungspotential P an, dass dem um den Spannungsabfall U_{R1} am Pull up- Widerstand R1 verringerten ersten Bezugspotential 12V der ersten Bezugsspannung U1 entspricht.

Bei geschlossenem erstem elektrischem Schalter 12 ist die Kommunikationsleitung 43 über den ersten elektrischen Schalter 12 mit Masse M verbunden. An der Kommunikationsleitung 43 liegt dann ein zweites Spannungspotential P' an, nämlich etwa Masse M oder ein zweites Spannungspotential P', das geringfügig größer als Masse M ist. Die auf der Empfangsleitung 43 anliegende Spannung U₄₃ pulsiert daher zwischen dem ersten Spannungspotential P und dem zweiten Spannungspotential P'.

Über die Gerätesteuerung 11 des Master- Steuergerätes 1 ist die an der Basis B des ersten Transistors 12 anliegende Spannung U₁₃₂, insbesondere die Zeit t, in der diese Spannung U₁₃₂ ausreichend groß ist, so dass der erste Transistor 12 durchgeschaltet ist, beziehungsweise so dass der erste Schalter 12 geschlossen ist, steuerbar. Diese Steuerung bewirkt daher ein pulsweitenmoduliertes Sendesignal PWM, U₄₃ auf der Kommunikationsleitung 43. Ein solches Signal PWM, U₄₃ zeigt die **Fig. 1(b)****.**

An der Empfangsleitung 231 des Slave- Steuergerätes 2 liegt das Sendesignal PWM ebenfalls an, wobei das erste und zweite Spannungspotential P, P' um die über den dritten Widerstand R3 des Spannungsteilers R3R4 abfallende Spannung U_{R3} verringert ist. Dadurch sieht die Gerätesteuerung 21 des Slave- Steuergerätes 2 das vom Master- Steuergerät 1 gesendete Sendesignal PWM und kann es verarbeiten.

Zum Senden des Sendesignals PWM vom Slave- Steuergerät 2 zum Master- Steuergerät 1 wird der im Slave- Steuergerät 2 angeordnete zweite elektrische Schalter 22 abwechselnd geöffnet und geschlossen. Dafür wird über die Sendeleitung 232 der Gerätesteuerung 21 des Slave- Steuergerätes 2 an der Basis B des zweiten elektrischen Schalters 21 eine ausreichend große Spannung U₂₃₂ zur Verfügung gestellt, so dass der zweite Transistor 22 durchschaltet und ein Strom vom Kollektor C zum Emitter E fließen kann. Dabei ist der erste elektrische Schalter 12 im Master- Steuergerät 1 geöffnet.

Bei geöffnetem zweitem Schalter 22 fällt über den Pull up- Widerstand R1 und den Spannungsteiler R3R4 im Slave- Steuergerät 2 die erste Bezugsspannung U1 ab. Die Kommunikationsleitung 43 liegt dann an dem ersten Spannungspotential P, das dem um den Spannungsabfall U_{R1} am Pull up-Widerstand R1 verringerten ersten Bezugspotential 12V der ersten Bezugsspannung U1 entspricht.

Ist der zweite elektrische Schalter 22 geschlossen, ist die Kommunikationsleitung 43 über den zweiten elektrischen Schalter 22 mit Masse M verbunden. An der Kommunikationsleitung 43 liegt dann das zweite Spannungspotential P' an, nämlich ebenfalls etwa an Masse M. Die beim Senden vom Slave- Steuergerät 2 zum Master- Steuergerät 1 auf der Empfangsleitung 43 anliegende Spannung U₄₃ pulsiert daher in analoger Weise zum Senden vom Master- Steuergerät 1 zum Slave- Steuergerät 2 zwischen dem ersten Spannungspotential P und dem zweiten Spannungspotential P'.

Da die Kommunikationsleitung 43 mit der Empfangsleitung 131 Gerätesteuerung 11 des Master- Steuergerätes 1 verbunden ist, sieht die Gerätesteuerung 11 des Master- Steuergerätes 1 das Sendesignal PWM vom Slave- Steuergerät 2 und kann es verarbeiten.

Bei dieser Anordnung 3 nach dem Stand der Technik arbeiten beide Steuergeräte 1, 2 mit derselben Bezugsspannung U1. Das Verbinden der Versorgungsleitungen 42, 44, 46 der Steuergeräte 1, 2 miteinander ist daher unkritisch.

Um Fehlströme zu vermeiden, die das Master- Steuergerät 1 beschädigen könnten, ist der Anschluss von Slave- Steuergeräten 2, die eine andere Bezugspannung U2 als das Master- Steuergerät 1 nutzen, bisher nur mit einer galvanischen Trennung 25, beispielsweise über Optokoppler (nicht gezeigt), zulässig. Eine solche Anordnung 3 nach dem Stand der Technik zeigt die **Fig. 2****.**

Bei dieser Anordnung 3 arbeitet die Gerätesteuerung 21 des Slave- Steuergerätes 2 mit einer zweiten, von der ersten Bezugsspannung U1 verschiedenen Bezugsspannung U2, nämlich beispielsweise mit 24V oder mit 48V. Das Slave- Steuergerät 2 ist daher über eine zweite Versorgungsleitung 40 und eine zweite Masseleitung 41 an eine zweite Gleichspannungsquelle (nicht gezeigt) angeschlossen, die die zweite Bezugsspannung U2 zur Verfügung stellt.

Das Slave- Steuergerät 2 unterscheidet sich zudem von dem Slave- Steuergerät 2 der **Fig. 1** darin, dass zwischen der Sende- und Empfangseinheit 24 des Slave- Steuergerätes 2 der **Fig. 2** und ihrer Gerätesteuerung 21 eine galvanische Trennung 25 vorgesehen ist. Dadurch ist die Empfangsleitung 231, die in der Anordnung 3 der **Fig. 1** unmittelbar mit der Kommunikationsleitung 43 verbunden ist, hier von dieser galvanisch getrennt. Und zudem ist dadurch die Sendeleitung 232, die in der Anordnung 3 der **Fig. 1** unmittelbar mit der Basis B des zweiten Transistors 22 verbunden ist, hier ebenfalls von dieser galvanisch getrennt. Dadurch sind hier alle elektrischen Verbindungen 231, 232 zwischen der mit der zweiten Bezugsspannung U2 arbeitenden Gerätesteuerung 21 und der mit der ersten Bezugsspannung U1 arbeitenden Sende- und Empfangseinheit 24 galvanisch voneinander getrennt. Fehlströme durch Kurzschluss, Masseverlust oder Verpolen auf der Seite der Gerätesteuerung 21 des Slave-Steuergerätes 2können daher gar nicht über die Sende- und Empfangseinheit 24 des Slave- Steuergerätes 2 zum Master- Steuergerät 1 fließen. Im Übrigen ist der Aufbau der Sende- und Empfangseinheit 24 des Slave-Steuergerätes 2 dieser Ausführungsform zu der des Slave- Steuergerätes 2 der **Fig. 1** identisch. Dies ist durch eine Linie 5 schematisch gezeigt. Außerdem wird bei dieser Anordnung 3 dasselbe Master- Steuergerät 1 wie in **Fig. 1** verwendet. Das Senden vom Master- Steuergerät 1 zum Slave- Steuergerät 2 sowie vom Slave- Steuergerät 2 zum Master- Steuergerät 1 erfolgt daher in analoger Weise wie bereits in der **Fig. 1** beschrieben.

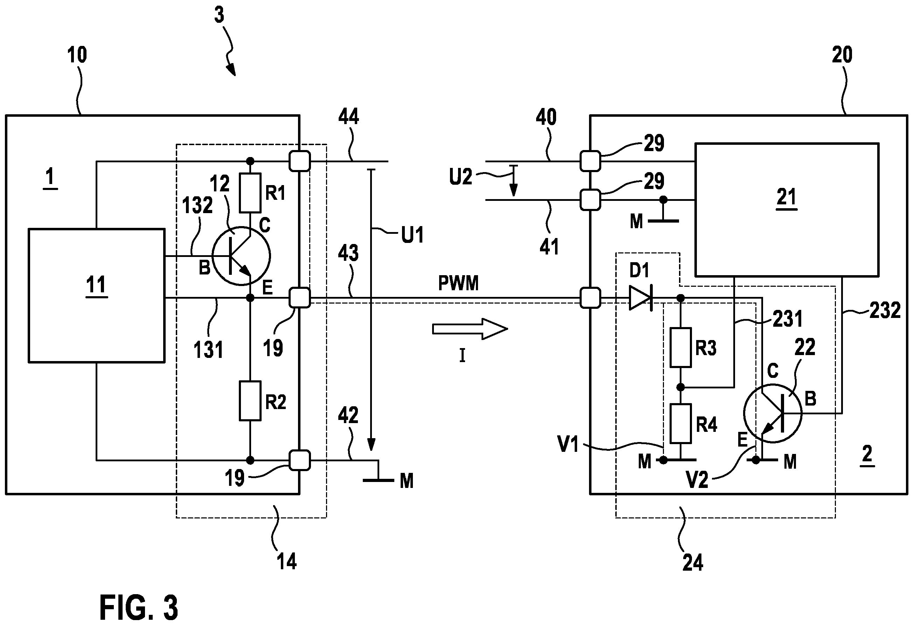

Die **Fig. 3** zeigt eine Anordnung 3 eines Master- Steuergerätes 1 und eines Slave- Steuergerätes 2, bei der auf eine galvanische Trennung 25 (s. **Fig. 2**) der Verbindungsleitungen 231, 232 von der Gerätesteuerung 21 zur Sende- und Empfangseinheit 24 des Slave- Steuergerätes 2 verzichtet werden kann.

Bei dieser Ausführungsform wird zum Einen ein Fehlstrom vom Slave-Steuergerät 2 über die Kommunikationsleitung 43 zum Master- Steuergerät 1 mit Hilfe einer Diode D1, die in der Kommunikationsleitung 43 angeordnet ist, verhindert. Die Diode D1 ist hier im Slave- Steuergerät 2 angeordnet, kann prinzipiell aber auch irgendwo anders in der Kommunikationsleitung 43 angeordnet sein, auch im Master- Steuergerät 1.

Zudem wird das beim Senden über die Kommunikationsleitung 43 an dieser anliegende erste Spannungspotential P zwar ebenfalls über die erste Versorgungsleitung 44 oder die Zündschaltleitung 46 zur Verfügung gestellt. Aber der Pull up- Widerstand R1 ist hier nicht im Slave- Steuergerät 2, sondern im Master- Steuergerät 1 angeordnet. Dadurch wird die erste Bezugsspannung U1 gar nicht im Slave- Steuergerät 2 benötigt, so dass das Master- Steuergerät 1 und das Slave- Steuergerät 2 nur über die Kommunikationsleitung 43 miteinander verbunden sind.

Auch bei dieser Anordnung ist das Master- Steuergerät 1 in einem Steuergerätegehäuse 10 angeordnet. Es umfasst ebenfalls eine Gerätesteuerung 11 und eine Sende- und Empfangseinheit 14. Die Gerätesteuerung weist eine Sendeleitung 132 zum Senden eines Sendesignals PWM vom Master- Steuergerät 1 zum Slave- Steuergerät 2 und eine Empfangsleitung 131 zum Empfangen eines Sendesignals PWM vom Slave- Steuergerät 2 zum Master- Steuergerät 1 auf.

Die Gerätesteuerung 11 ist über eine erste Versorgungsleitung 44 und eine Masseleitung 42 an die Gleichspannungsquelle (nicht gezeigt) angeschlossen, die die erste Bezugsspannung U1 bereitstellt. Dabei liegt an der ersten Versorgungsleitung 44 das erste Bezugspotential der ersten Bezugsspannung U1, nämlich die 12V Bordnetzspannung, an. An der Masseleitung 42 liegt das zweite Bezugspotential der ersten Bezugsspannung U1, nämlich Masse, an.

Die Zündschaltleitung 46 ist hier nicht gezeigt.

Zum Senden umfasst die Sende- und Empfangseinheit 14 den ersten Schalter 12, der hier ebenfalls als Bipolar- Transistor ausgebildet ist. Dieser ist ebenfalls in Emitterschaltung angeordnet. Dafür sind der Emitter E des ersten Transistors 12 an die Kommunikationsleitung 43, die Basis B des ersten Transistors 12 an die Sendeleitung 132 der Gerätesteuerung 11 und der Kollektor C des ersten Transistors 12 über den Pull up- Widerstand R1 an die erste Versorgungsleitung 44 angeschlossen. Die Kommunikationsleitung 43 ist zudem über einen zweiten Widerstand R2 an die Masseleitung 42 angeschlossen. Außerdem ist sie an die Empfangsleitung 131 der Gerätesteuerung 11 angeschlossen, die auch hier hochohmig ausgebildet ist.

Auch das Slave- Steuergerät 2 ist in einem Slave- Steuergerätegehäuse 20 angeordnet. Das Slave- Steuergerät 2 umfasst ebenfalls die Gerätesteuerung 21, die die Sendeleitung 232 und die Empfangsleitung 231 aufweist. Auch hier ist die Sende- und Empfangseinheit 24 mit einem zweiten Schalter 22 vorgesehen, der als Bipolar- Transistor ausgebildet ist. Auch dieser zweite Transistor 22 ist in Emitterschaltung geschaltet.

Dabei ist die Sendeleitung 232 des Slave- Steuergeräts 2 mit der Basis B des zweiten Transistors 22 verbunden. Der Emitter des zweiten Transistors 22 ist an die Masse M angeschlossen. Der Kollektor C des zweiten Transistors 22 ist an die Kommunikationsleitung 43 angeschlossen.

Die Empfangsleitung 231 des Slave- Steuergeräts 2 ist auch hier an einen Spannungsteiler R3R4, der einen dritten Widerstand R3 und einen vierten Widerstand R4 umfasst, angeschlossen. Der dritte Widerstand R3 verbindet die Kommunikationsleitung 43 mit der Empfangsleitung 231, der vierte Widerstand R4 verbindet die Empfangsleitung 231 mit Masse M. Dadurch wird auch hier ein auf der Empfangsleitung 231 beziehungsweise an der Gerätesteuerung 21 anliegende Spannungspotential U₂₃₁ beim Empfangen des Sendesignals PWM vom Master- Steuergerät 1 zum Slave- Steuergerät 2 so angepasst, dass es von der Gerätesteuerung 21 des Slave-Steuergerätes 2 verarbeitbar ist.

Die Gerätesteuerung 21 des Slave- Steuergerätes 2 arbeitet mit der zweiten Bezugsspannung U2 und ist daher hier über die zweite Versorgungsleitung 40 und die zweite Masseleitung 41 an die zweite Gleichspannungsquelle angeschlossen, die diese zur Verfügung stellt.

Zum Senden des Sendesignals PWM vom Master- Steuergerät 1 zum Slave- Steuergerät 2 wird der erste elektrische Schalter 12 abwechselnd geöffnet und geschlossen. Zum Schließen wird dafür auch hier von der Gerätesteuerung 11 des Master- Steuergerätes 1 an der Basis B des ersten Transistors 12 die Spannung (nicht gezeigt) bereitgestellt, die den Stromfluss I vom Kollektor C zum Emitter E ermöglicht, und zum Öffnen entsprechend verringert. Dabei ist der zweite elektrische Schalter 22 der Sende- und Empfangseinheit 24 des Slave- Steuergerätes 2 geöffnet.

Ist der erste elektrische Schalter 12 geschlossen, fällt die erste Bezugsspannung U1 über den Pull up- Widerstand R1 und den Spannungsteiler R3R4 im Slave- Steuergerät 2 zur Masse ab. Diese erste elektrische Verbindung V1 ist in gestrichelten Linien schematisch in der Fig. 3 gezeigt. Die Kommunikationsleitung 43 liegt dann an dem ersten Spannungspotential P an, dass dem um den Spannungsabfall U_{R1} am Pull up- Widerstand R1 verringerten ersten Bezugspotential 12V der ersten Bezugsspannung U1 entspricht. Um ein definiertes Spannungspotential P auf der Kommunikationsleitung 43 bei geschlossenem erstem elektrischem Schalter 12 bereit zu stellen, ist ein zweiter Widerstand R2 vorgesehen, der mit dem Pull up- Widerstand R1 einen Spannungsteiler R1 R2 bildet.

Bei geöffnetem erstem elektrischem Schalter 12 ist erste Verbindung V1 unterbrochen und die Kommunikationsleitung 43 über den Spannungsteiler R3R4 mit Masse M verbunden. An der Kommunikationsleitung 43 liegt dann ein zweites Spannungspotential P' an, nämlich etwa Masse M oder ein zweites Spannungspotential P', das geringfügig größer als Masse M ist. Die auf der Empfangsleitung 43 anliegende Spannung U₄₃ pulsiert daher zwischen dem ersten Spannungspotential P und dem zweiten Spannungspotential P' analog zu dem in **Fig. 1(b)** gezeigten Sendesignal PWM.

Über die Gerätesteuerung 11 des Master- Steuergerätes 1 ist auch hier die an der Basis B des ersten Transistors 12 anliegende Spannung U₁₃₂, insbesondere die Zeit t, in der diese Spannung U₁₃₂ ausreichend groß ist, so dass der erste Transistor 12 durchgeschaltet ist, beziehungsweise so dass der erste Schalter 12 geschlossen ist, steuerbar. Diese Steuerung bewirkt daher ebenfalls ein pulsweitenmoduliertes Sendesignal PWM, U₄₃ auf der Kommunikationsleitung 43.

An der Empfangsleitung 231 des Slave- Steuergerätes 2 liegt das Sendesignal PWM ebenfalls an, wobei das erste und zweite Spannungspotential P, P' um die über den dritten Widerstand R3 des Spannungsteilers R3R4 abfallende Spannung U_{R3} verringert ist. Dadurch sieht die Gerätesteuerung 21 des Slave- Steuergerätes 2 das vom Master- Steuergerät 1 gesendete Sendesignal PWM und kann es verarbeiten.

Zum Senden des Sendesignals PWM vom Slave- Steuergerät 2 zum Master- Steuergerät 1 wird der im Slave- Steuergerät 2 angeordnete zweite elektrische Schalter 22 abwechselnd geöffnet und geschlossen. Dafür wird über die Sendeleitung 232 der Gerätesteuerung 21 des Slave- Steuergerätes 2 an der Basis B des zweiten elektrischen Schalters 21 eine ausreichend große Spannung U₂₃₂ zur Verfügung gestellt, so dass der zweite Transistor 22 durchschaltet und ein Strom vom Kollektor C zum Emitter E fließen kann. Dabei ist der erste elektrische Schalter 12 im Master- Steuergerät 1 geschlossen.

Bei geöffnetem zweitem Schalter 22 fällt die erste Bezugsspannung U1 über den Pull up- Widerstand R1 und den Spannungsteiler R3R4 im Slave- Steuergerät 2 zur Masse ab. Diese zweite elektrische Verbindung bei geschlossenem erstem und zweitem Schalter12, 22 ist in der **Fig. 3** durch eine gestrichelte Linie V2 schematisch gezeigt. Die Kommunikationsleitung 43 liegt dann an dem ersten Spannungspotential P, das dem um den Spannungsabfall U_{R1} am Pull up- Widerstand R1 verringerten ersten Bezugspotential 12V der ersten Bezugsspannung U1 entspricht.

Ist der zweite elektrische Schalter 22 geschlossen, ist die Kommunikationsleitung 43 über den zweiten elektrischen Schalter 22 mit Masse M verbunden. An der Kommunikationsleitung 43 liegt dann das zweite Spannungspotential P' an, nämlich ebenfalls etwa Masse M. Die beim Senden vom Slave- Steuergerät 2 zum Master- Steuergerät 1 auf der Empfangsleitung 43 anliegende Spannung U₄₃ pulsiert daher in analoger Weise zum Senden vom Master- Steuergerät 1 zum Slave- Steuergerät 2 zwischen dem ersten Spannungspotential P und dem zweiten Spannungspotential P'.

Da die Kommunikationsleitung 43 mit der Empfangsleitung 131 der Gerätesteuerung 11 des Master- Steuergerätes 1 verbunden ist, sieht die Gerätesteuerung 11 des Master- Steuergerätes 1 das Sendesignal PWM vom Slave- Steuergerät 2 und kann es verarbeiten.

In allen genannten Ausführungsformen wird das Massepotential beziehungsweise die Masse der Gleichspannungsquellen über einen zentralen Massepunkt M im Kraftfahrzeug zur Verfügung gestellt. Der zentrale Massepunkt M und die Masse beziehungsweise das Massepotential sind daher hier mit demselben Bezugszeichen M bezeichnet. Um einen Stromfluss über die Masseleitungen 41, 42, die an den Steuergeräten 1, 2 vorgesehen sind, zu vermeiden, sind diese aber nicht miteinander verbunden.

Die Anordnung der **Fig. 3** benötigt nur eine einzige Verbindung zwischen den beiden Steuergeräten 1, 2, nämlich die Kommunikationsleitung 43. Zudem erfordert sie keine galvanische Trennung 25. Sie ist dadurch kostengünstiger herstellbar und einfacher montierbar.

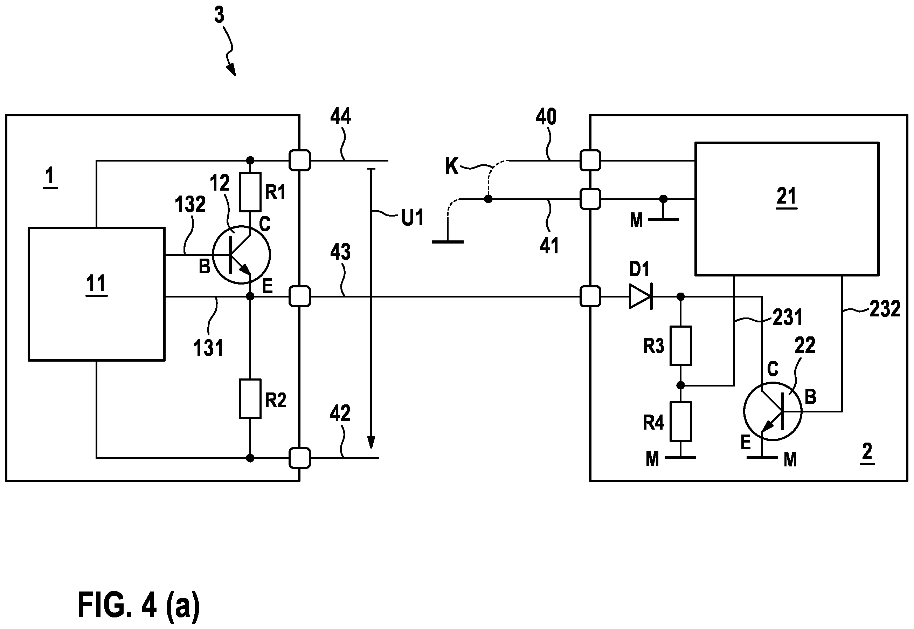

Die **Fig. 4 (a) - (b)** zeigen schematisch Fehlerfälle. In der **Fig. 4 (a)** ist ein Masseverlust beziehungsweise ein Kurzschluss zwischen der zweiten Versorgungsleitung 40 und der zweiten Masseleitung 41 des Slave- Steuergerätes 2 schematisch dargestellt. Dadurch liegt das erste Bezugspotential der zweiten Bezugsspannung, nämlich beispielsweise 24V oder 48V, an der Masse an. Ein Fehlstrom über die Kommunikationsleitung 43 zum Master- Steuergerät 1 wird aber mit der Diode D1 verhindert.

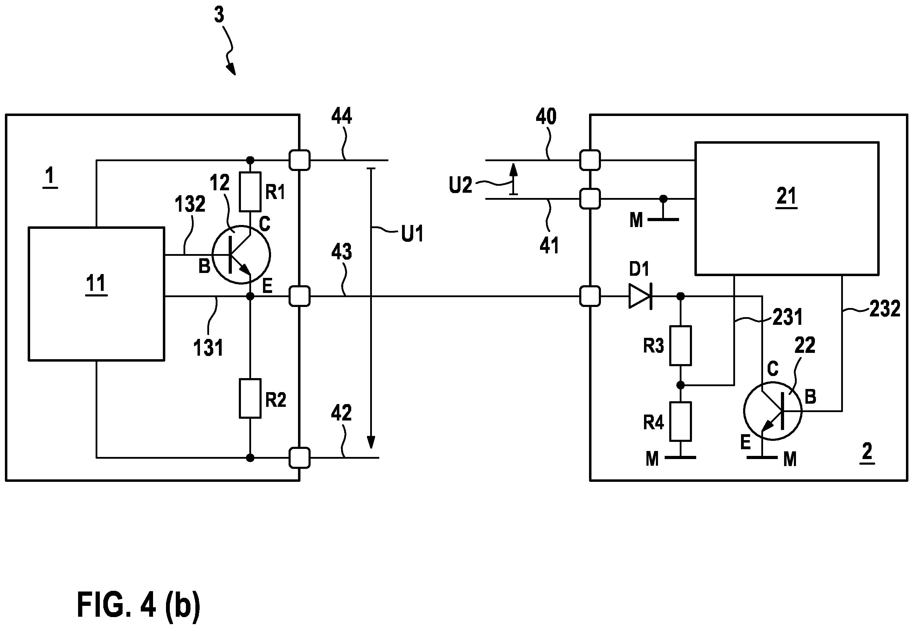

In der **Fig. 4 (b)** ist ein Verpolen der zweiten Versorgungsleitung 40 und der zweiten Masseleitung 41 schematisch dargestellt. Auch dadurch liegt das erste Bezugspotential der zweiten Bezugsspannung, nämlich beispielsweise 24V oder 48V, an der Masse an. Ein Fehlstrom über die Kommunikationsleitung 43 zum Master- Steuergerät 1 wird aber auch dabei mit der Diode D1 verhindert.

## Patentansprüche

1. Anordnung (3) aus einem Master- Steuergerät (1) und einem Slave-Steuergerät (2) für ein Kraftfahrzeug, wobei das Master- Steuergerät (1) eine erste Sende- und Empfangseinheit (14) und das Slave- Steuergerät (2) eine zweite Sende- und Empfangseinheit (24) umfassen, sowie eine die Sende- und Empfangseinheiten (14, 24) verbindende Kommunikationsleitung (43), wobei das Master- Steuergerät (1) mit einer ersten Bezugsspannung (U1) und das Slave- Steuergerät (2) mit einer zweiten Bezugsspannung (U2) arbeiten, die verschieden sind,
**dadurch gekennzeichnet, dass**
in der Kommunikationsleitung (43) eine Diode (D1) vorgesehen ist, die einen Stromfluss (I) von der zweiten Sende- und Empfangseinheit (24) in Richtung zur ersten Sende- und Empfangseinheit (14) verhindert.

2. Anordnung (3) nach Anspruch 1, **dadurch gekennzeichnet, dass** die erste Bezugsspannung ein erstes Bezugspotential aufweist, das kleiner als ein erstes Bezugspotential der zweiten Bezugsspannung (U2) ist.

3. Anordnung (3) nach einem der vorherigen Ansprüche, **dadurch gekennzeichnet, dass** die erste und zweite Bezugsspannung (U1, U2) ein gemeinsames, an einem zentralen Massepunkt (M) des Kraftfahrzeugs miteinander verbundenes zweites Bezugspotential aufweisen, insbesondere Masse.

4. Anordnung (3) nach dem Oberbegriff des Patentanspruchs 1, insbesondere nach einem der vorherigen Ansprüche, wobei die Kommunikationsleitung (43) über einen Pull up- Widerstand (R1) mit einer ersten Versorgungsleitung (44) verbindbar ist,
**dadurch gekennzeichnet, dass**
der Pull up- Widerstand (R1) im Master- Steuergerät (1) angeordnet ist.

5. Anordnung (3) nach einem der vorherigen Ansprüche, **dadurch gekennzeichnet, dass** die erste Sende- und Empfangseinheit (14) des Master- Steuergerätes (1) einen ersten elektrischen Schalter (12), und die zweite Sende- und Empfangseinheit (24) des Slave- Steuergerätes (2) einen zweiten elektrischen Schalter (22) aufweisen.

6. Anordnung (3) nach einem der vorherigen Ansprüche, **dadurch gekennzeichnet, dass** ein pulsierendes Sendesignal (PWM) auf der Kommunikationsleitung (43) durch abwechselndes Öffnen und Schließen des ersten oder des zweiten elektrischen Schalters (12, 22) erzeugbar ist.

7. Anordnung (3) nach einem der vorherigen Ansprüche, **dadurch gekennzeichnet, dass** das Sendesignal (PWM) vom Master- Steuergerät (1) zum Slave- Steuergerät (2) durch abwechselndes Öffnen und Schließen des ersten Schalters (12) erzeugbar ist.

8. Anordnung (3) nach einem der vorherigen Ansprüche, **dadurch gekennzeichnet, dass** ein Sendesignal (PWM) vom Slave- Steuergerät (2) zum Master- Steuergerät (1) durch abwechselndes Öffnen und Schließen des zweiten Schalters (22) erzeugbar ist.

9. Anordnung (3) nach einem der vorherigen Ansprüche, **dadurch gekennzeichnet, dass** der erste elektrische Schalter (12) der Sende- und Empfangseinheit (14) des Master- Steuergerätes (1) in einem Empfangsmodus, insbesondere beim Senden des Sendesignals (PWM) vom Slave- Steuergerät (2) zum Master- Steuergerät (1), geschlossen ist.

10. Anordnung (3) nach einem der vorherigen Ansprüche, **dadurch gekennzeichnet, dass** der erste elektrische Schalter (12) und/oder der zweite elektrische Schalter (22) als Transistoren, insbesondere als Bipolartransistoren, ausgebildet sind.

11. Anordnung (3) nach einem der vorherigen Ansprüche, **dadurch gekennzeichnet, dass** die Diode (D1) in der Sende- und Empfangseinheit (24) des Slave- Steuergerätes (2) angeordnet ist.

12. Master- Steuergerät (1) für eine Anordnung (3) nach einem der vorherigen Ansprüche, **dadurch gekennzeichnet, dass** es den Pull up- Widerstand (R1) umfasst.

13. Slave- Steuergerät (3) für eine Anordnung (3) nach einem der Ansprüche 1 bis 11, **dadurch gekennzeichnet, dass** es die Diode (D1) umfasst.

## Claims

1. Arrangement (3) made up of a master controller (1) and a slave controller (2) for a motor vehicle, wherein the master controller (1) includes a first transceiver unit (14) and the slave controller (2) includes a second transceiver unit (24), and a communication line (43) connecting the transceiver units (14, 24), wherein the master controller (1) operates at a first reference voltage (U1) and the slave controller (2) operates at a second reference voltage (U2), the voltages being different,
**characterized in that**
a diode (D1) is provided in the communication line (43) which prevents a current flow (I) from the second transceiver unit (24) in the direction of the first transceiver unit (14).

2. Arrangement (3) according to Claim 1, **characterized in that** the first reference voltage has a first reference potential which is lower than a first reference potential of the second reference voltage (U2).

3. Arrangement (3) according to one of the preceding claims, **characterized in that** the first and second reference voltages (U1, U2) have a shared second reference potential which is interconnected at a central ground point (M) of the motor vehicle, in particular ground.

4. Arrangement (3) according to the preamble of Patent Claim 1, in particular according to one of the preceding claims, wherein the communication line (43) is connectable to a first power supply line (44) via a pull-up resistor (R1),
**characterized in that**
the pull-up resistor (R1) is situated in the master controller (1).

5. Arrangement (3) according to one of the preceding claims, **characterized in that** the first transceiver unit (14) of the master controller (1) includes a first electric switch (12), and the second transceiver unit (24) of the slave controller (2) includes a second electric switch (22).

6. Arrangement (3) according to one of the preceding claims, **characterized in that** a pulsing transmission signal (PWM) may be generated on the communication line (43) by alternately opening and closing the first or the second electric switch (12, 22).

7. Arrangement (3) according to one of the preceding claims, **characterized in that** the transmission signal (PWM) from the master controller (1) to the slave controller (2) may be generated by alternately opening and closing the first switch (12).

8. Arrangement (3) according to one of the preceding claims, **characterized in that** a transmission signal (PWM) from the slave controller (2) to the master controller (1) may be generated by alternately opening and closing the second switch (22).

9. Arrangement (3) according to one of the preceding claims, **characterized in that** the first electric switch (12) of the transceiver unit (14) of the master controller (1) is closed in a reception mode, in particular when transmitting the transmission signal (PWM) from the slave controller (2) to the master controller (1).

10. Arrangement (3) according to one of the preceding claims, **characterized in that** the first electric switch (12) and/or the second electric switch (22) are designed as transistors, in particular as bipolar transistors.

11. Arrangement (3) according to one of the preceding claims, **characterized in that** the diode (D1) is situated in the transceiver unit (24) of the slave controller (2).

12. Master controller (1) for an arrangement (3) according to one of the preceding claims, **characterized in that** it includes the pull-up resistor (R1).

13. Slave controller (3) for an arrangement (3) according to one of Claims 1 to 11, **characterized in that** it includes the diode (D1).

## Revendications

1. Système (3) constitué d'un appareil de commande maître (1) et d'un appareil de commande esclave (2) destiné à un véhicule automobile, dans lequel l'appareil de commande maître (1) comprend une première unité d'émission et de réception (14) et l'appareil de commande esclave (2) comprend une deuxième unité d'émission et de réception (24), ainsi qu'une ligne de communication (43) connectant les unités d'émission et de réception (14, 24), dans lequel l'appareil de commande maître (1) fonctionne avec une première tension de référence (U1) et l'appareil de commande esclave (2) fonctionne avec une deuxièmes tension de référence (U2), lesquelles tensions de référence sont différentes,
**caractérisé en ce que**,
sur la ligne de communication (43), il est prévu une diode (D1) qui empêche le passage de courant (I) de la deuxième unité d'émission et de réception (24) vers la première unité d'émission et de réception (14).

2. Système (3) selon la revendication 1, **caractérisé en ce que** la première tension de référence présente un premier potentiel de référence qui est inférieur à un premier potentiel de référence de la deuxième tension de référence (U2).

3. Système (3) selon l'une quelconque des revendications précédentes, **caractérisé en ce que** les première et deuxième tensions de référence (U1, U2) présentent un deuxième potentiel de référence commun, notamment une masse, connecté en commun au niveau d'un point de masse central (M) du véhicule automobile.

4. Système (3) selon le préambule de la revendication 1, notamment selon l'une quelconque des revendications précédentes, dans lequel la ligne de communication (43) peut être connectée par l'intermédiaire d'une résistance de rappel vers le niveau haut (R1) à une première ligne d'alimentation (44),
**caractérisé en ce que** la résistance de rappel vers le niveau haut (R1) est disposée dans l'appareil de commande maître (1).

5. Système (3) selon l'une quelconque des revendications précédentes, **caractérisé en ce que** la première unité d'émission et de réception (14) de l'appareil de commande maître (1) comporte un premier commutateur électrique (12), et **en ce que** la deuxième unité d'émission et de réception (24) de l'appareil de commande esclave (2) comporte un deuxième commutateur électrique (22).

6. Système (3) selon l'une quelconque des revendications précédentes, **caractérisé en ce qu'**un signal d'émission pulsé (PWM) peut être généré sur la ligne de communication (43) par ouverture et fermeture alternées du premier ou du deuxième commutateur électrique (12, 22).

7. Système (3) selon l'une quelconque des revendications précédentes, **caractérisé en ce que** le signal d'émission (PWM) peut être généré par l'appareil de commande maître (1) à destination de l'appareil de commande esclave (2) par ouverture et fermeture alternées du premier commutateur (12).

8. Système (3) selon l'une quelconque des revendications précédentes, **caractérisé en ce qu'**un signal d'émission (PWM) peut être généré par l'appareil de commande esclave (2) à destination de l'appareil de commande maître (1) par ouverture et fermeture alternées du deuxième commutateur (22).

9. Système (3) selon l'une quelconque des revendications précédentes, **caractérisé en ce que** le premier commutateur électrique (12) de l'unité d'émission et de réception (14) de l'appareil de commande maître (1) est fermé dans un mode de réception, notamment lors de l'émission du signal d'émission (PWM) par l'appareil de commande esclave (2) à destination de l'appareil de commande maître (1).

10. Système (3) selon l'une quelconque des revendications précédentes, **caractérisé en ce que** le premier commutateur électrique (12) et/ou le deuxième commutateur électrique (12) sont réalisés sous la forme de transistors, notamment sous la forme de transistors bipolaires.

11. Système (3) selon l'une quelconque des revendications précédentes, **caractérisé en ce que** la diode (D1) est disposée dans l'unité d'émission et de réception (24) de l'appareil de commande esclave (2).

12. Appareil de commande maître (1) destiné à un système (3) selon l'une quelconque des revendications précédentes, **caractérisé en ce qu'**il comprend la résistance de rappel vers le niveau haut (R1).

13. Appareil de commande esclave (3) destiné à un système (3) selon l'une quelconque des revendications 1 à 11, **caractérisé en ce qu'**il comprend la diode (D1).
